(19) Europäisches Patentamt
European Patent Office
Office européen des brevets

(11) **EP 1 973 104 B1**

(12) **EUROPEAN PATENT SPECIFICATION**

(45) Date of publication and mention
of the grant of the patent:
**18.09.2013 Bulletin 2013/38**

(51) Int Cl.:
***G10L 21/0208*** *(2013.01)*

(21) Application number: **08153098.2**

(22) Date of filing: **20.03.2008**

(54) **Method and apparatus for estimating noise by using harmonics of a voice signal**

Verfahren und Vorrichtung zur Rauschschätzung unter Verwendung von Harmonischen von Sprachsignalen

Procédé et appareil d'évaluation sonore en utilisant les harmoniques d'un signal vocal

(84) Designated Contracting States:
**DE FR GB**

(30) Priority: **22.03.2007 KR 20070028310**

(43) Date of publication of application:
**24.09.2008 Bulletin 2008/39**

(73) Proprietors:
• **Samsung Electronics Co., Ltd.**
**Suwon-si, Gyeonggi-do, 443-742 (KR)**
• **Korea University Industrial & Academic**
**Collaboration Foundation**
**Seoul (KR)**

(72) Inventors:
• **Kim, Hyun-Soon**
**Gyeonggi-do (KR)**

• **Ko, Han-Suk**
**Seoul (KR)**
• **Ahn, Sung Joo**
**Seoul (KR)**
• **Beh, Jounghoon**
**Seoul (KR)**
• **Yoon, Hyun-Jin**
**Seoul (KR)**

(74) Representative: **Grünecker, Kinkeldey,**
**Stockmair & Schwanhäusser**
**Leopoldstrasse 4**
**80802 München (DE)**

(56) References cited:
**EP-A- 1 059 628**

**Description**

The present invention relates to sound signal processing, and, more particularly, to a method and an apparatus for estimating noise included in a sound signal.

In sound signal processing for voice communication or for voice recognition that requires voice enhancement, it is important to estimate and remove noise included in a voice signal. Accordingly, schemes for estimating noise have been proposed and used. For example, to estimate noise, one scheme first estimates the noise during a definite time interval, i.e. a period, in which a voice does not exist before the voice is input, and once the voice is input, a signal to reduce the estimated noise is applied. In another scheme, a voice is distinguished from a non-voice by using Voice Activity Detection (VAD), and then noise is estimated during a non-voice period. There is also a minimum statistics-based noise estimation scheme in which, based on characteristics of a voice spectral energy in a voice period being larger than spectral energy of noise and of a pronunciation period of a voice word corresponds to 0.7 to 1.3 seconds, values representing minimum energy in a given period are estimated to be noise. In a still further scheme, an approximate determination is made of the probability regarding whether a voice exists, to estimate noise during a period in which Voice Presence Probability (VPP) is large, whereas noise is not estimated during a period in which the VPP is small.

However, the above conventional noise estimation schemes have drawbacks in that they cannot detect changes of non- stationary noise, to reflect the changes in noise estimation. For example, inaccurate noise such as ambient audio sound that is abruptly generated in real life, or noise including a sound generated when a door is closed, a sound of footsteps, etc., having a short time duration but as also having a similarly large magnitude of energy as that of voice energy, cannot be effectively estimated. Hence, problems arise in that inaccurate noise estimation causes a problem of residual noise. Residual noise causes inconvenience of hearing to a user in voice communication or malfunction of a voice recognizing device, which degrades the performance of a voice recognizing product.

The reason conventional noise estimation schemes have the above problems is that when a scheme of processing a subsequent voice signal with reference to a result in a voice period previously processed, noise that is not the same as previous noise in a relevant period may exist, and when a scheme of estimating noise during only a relevant period with approximate prediction of a period in which noise exists, there is a limit for accurately estimating a period in which noise exists. Also, since a scheme for distinguishing between a voice and a non-voice by using a difference between the magnitudes of energy of respective signals or Signal-to-Noise Ratio (SNR), i.e. when a scheme for recognizing a period as a voice period if the value such as a difference between the magnitudes of energy of respective signals or Signal-to-Noise Ratio (SNR) is large and for regarding a period as a non-voice period if the value is small, if ambient noise having energy whose magnitude is similar to that of energy of a voice is input, noise estimation is not implemented, and, accordingly, a noise spectrum is not updated.

EP1059628A2 refers to a signal for noise reduction by spectral substraction. An input signal is input to an input signal terminal, wherein the signal has been subjected to sampling at a specified frequency and then subdivided into portions in units of certain frames. This input signal may be full of background noice components in some cases. In other cases, this signal may be an audio/voice signal with background noises partly mixed there into. A noise similarity analyzer circuit is configured from a linear prediction/analyze circuit, a low-pass filter and inverse filter, a self or auto correlation analyzer circuit and an update rate coefficient determined circuit. The low pass filter performs filtering, processing of the input signal to obtain a low pass filtered signal. Performing the low-pass filtering processing makes it possible to remove away the influence of high-frequency noise components which in turn enables achievement of stable analyzation required. The inverse filter applies inverse filtering processing to the low pass filter signal by use of a linear prediction coefficient or factor, thereby outputting a low pass linear prediction residual signal. Subsequently, the auto correlation analyzer circuit operates to perform autocorrelation analyzation of the low pass different signal to obtain a peak value positive in polarity, which is represented by $RAC_{max}$. The update rate coefficient determination circuit operates in such a way as to use the value $RAC_{max}$ and also the frame power and the power of the low pass residual signal to determine the noise similarity at 5 levels to determine an average noice spectrum update rate coefficient in accordance with each level.

Accordingly, the present invention has been made to solve the above- stated problems occurring in conventional methods. It is the object of the present invention to provide a method and an apparatus for estimating non- stationary noise in voice signal processing, and for eliminating the estimated non- stationary noise.

This object is solved by the subject matter of the independent claims.

Preferred embodiments are defined in the dependent claims.

The above and other exemplary features, aspects, and advantages of the present invention will be more apparent from the following detailed description taken in conjunction with the accompanying drawings, in which:

FIG. 1 is a block diagram illustrating the configuration of an apparatus for estimating noise according to an embodiment of the present invention;
FIG. 2 is a flowchart illustrating a process for estimating noise according to an embodiment of the present invention;
FIGs. 3A, 3B and 3C show examples of a power spectrum, a Linear Prediction Coefficients (LPC) spectrum, and a harmonics spectrogram according to an embodiment of the present invention, respectively;

FIG. 4 is a graph of values of weights of an equation necessary to estimate a noise spectrum according to an embodiment of the present invention; and

FIGs. 5A-5D show examples of frequency diagrams obtained from a noise spectrum estimations implemented in a prior scheme and according to an embodiment of the present invention, respectively.

Hereinafter, exemplary embodiments of the present invention will be described in detail with reference to the accompanying drawings. The next description includes particulars, such as specific configuration elements, which are only presented in support of more comprehensive understanding of the present invention, and it will be obvious to those of ordinary skill in the art that prescribed changes in form and modifications may be made to the particulars in the scope of the present invention. Further, in the following description of the present invention, a detailed description of known functions and configurations incorporated herein is omitted to avoid making the subject matter of the present invention unclear.

For a human being to pronounce a vocal sound, vibrations of the vocal chords must be generated, and the vibrations appear in the form of harmonics in the frequency domain. Also, components of the harmonics have characteristics such that most properties thereof remain, even in a noisy environment. In the present invention, by using vocal sounds and the characteristics of harmonics, depending on how many harmonics components exist in a sound signal, a suitable noise spectrum is estimated, and the value of the noise spectrum is updated. At this time, Equation (1) is used to estimate a noise spectrum.

$$N(k, t) = \alpha(k, t)N(k, t-1) + (1 - \alpha(k, t))Y(k, t) \dots\dots\dots\dots\dots\dots\dots\dots\dots\dots\dots\dots\dots\dots (1)$$

Herein, N (k, t) represents the noise spectrum, Y (k, t) represents a spectrum of an input signal, k represents a frequency index, and t represents a frame index. The above Equation (1) corresponds to an equation used to estimate a noise spectrum in a Minima Controlled Recursive Averaging (MCRA) noise estimation scheme. In the present invention, based on Voice Presence Probability (VPP) , which is estimated by using harmonics detected in an input sound signal, the value of a weight $\alpha$ (k, t) of the above Equation (1) is adjusted, and then a noise spectrum is estimated.

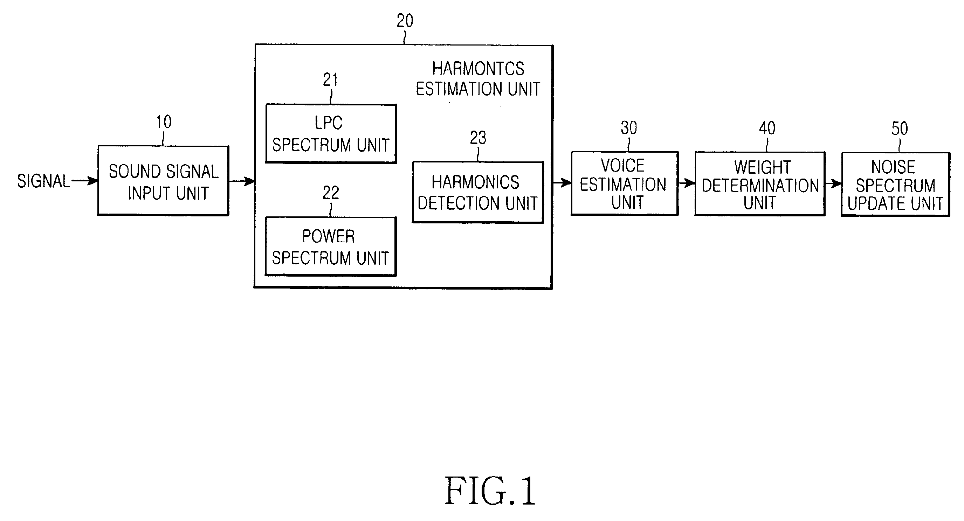

An apparatus for estimating noise to which the present invention in this manner is applied is described as follows with reference to FIG. 1. As illustrated in FIG. 1, the apparatus for estimating noise (i.e. the noise estimation apparatus) includes a sound signal input unit 10, a harmonics estimation unit 20, a voice estimation unit 30, a weight determination unit 40 and a noise spectrum update unit 50.

By using a Hanning window having a predetermined length, the sound signal input unit 10 divides an input sound signal into frames. For instance, by using the Hanning window 32 milliseconds in length, a sound signal can be divided into frames, and at this time, a moving period of the Hanning window can be set to 16 milliseconds. The sound signal divided into frames by the sound signal input unit 10 is output to the harmonics estimation unit 20.

The harmonics estimation unit 20 extracts harmonics components from an input sound signal by the frame, and outputs the extracted harmonics components to the voice estimation unit 30. As indicated above, to pronounce a vocal sound, vibrations of the vocal chords are generated and the vibrations appear in the form of harmonics in the frequency domain. In order to find the harmonics, components related to a shape of a vocal passage that determines the type of vocal sound a human being utters must be removed for vocal sounds, corresponding to a vibration signal of the vocal cords and the shape of the vocal passage, the vocal sound is represented as a convolution of impulse responses, and the convolution of impulse responses is readily represented in the form of multiplication in the frequency domain. So that the harmonics estimation unit 20 can estimate harmonics in an input sound signal based on characteristics of the vocal sounds, according to an embodiment of the present invention, the harmonics estimation unit 20 includes an LPC spectrum unit 21, a power spectrum unit 22, and a harmonics detection unit 23. The LPC spectrum unit 21 converts a sound signal by the frame provided from the sound signal input unit 10 into an LPC spectrum, and outputs the LPC spectrum to the harmonics detection unit 23.

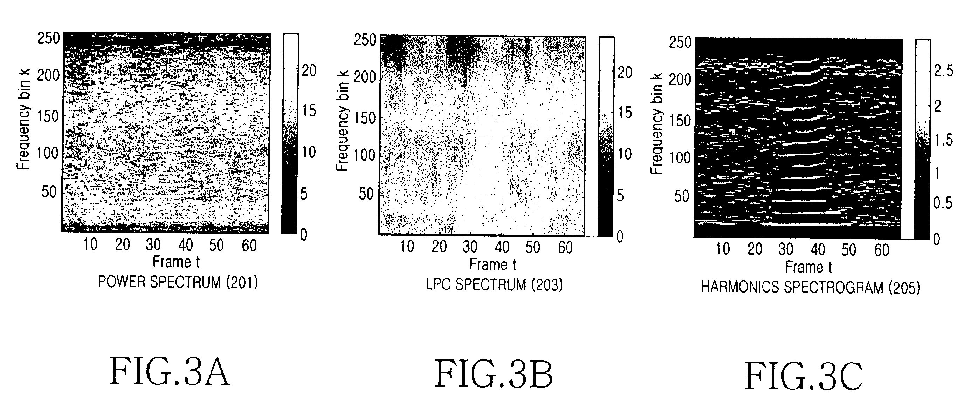

The power spectrum unit 22 converts a sound signal by the frame provided from the sound signal input unit 10 into a power spectrum, and outputs the power spectrum to the harmonics detection unit 23. By using the input LPC spectrum and the input power spectrum, the harmonics detection unit 23 detects harmonics components in a relevant frame of a sound signal, and outputs the detected harmonics components to the voice estimation unit 30. Namely, the harmonics detection unit 23 divides the LPC spectrum into the power spectrums, and then detect harmonics components. Respective examples of such spectrums are shown in FIGs. 3A-C, which show a power spectrum , a Linear Prediction Coefficients (LPC) spectrum , and a harmonics spectrogram according to an embodiment of the present invention, respectively. Referring to the harmonics spectrogram of Fig. 3C, it can be appreciated that when a sound signal is represented in the form of a spectrum, harmonics appear in the shape of stripes having definite respective lengths, and a relatively large part of the shape remains even in a noisy environment. However, examination of the harmonics spectrogram reveals that noise around a voice causes a part (i.e., a part in white remaining in other parts except for a part representing a voice), which does not represent harmonics but has the values on the spectrogram, to exist. To remove the white part, the harmonics detection unit 23 enables a mask having a suitable value. The harmonics estimation unit 20 that detects the harmonics through this process outputs the detected harmonics to the voice estimation unit 30. The voice estimation unit 30 uses input harmonics components and estimates the VPP. According to an embodiment of the present invention, the voice estimation unit 30 computes Local Voice Presence Probability (LVPP) and Global Voice Presence Probability (GVPP), and computes VPP, which is then provided to the weight determination unit 40.

Based on the input VPP, the weight determination unit 40 determines the weight α (k, t) In Equation (1). As in the harmonics spectrogram of Fig. 3C, harmonics components appear in the shape of stripes. Since a part having significant values besides another part representing the harmonics corresponds to an unusual part, when a noise spectrum is updated using Equation (1), the value of the weight α(k, t) in Equation (1) must be small, and in relation to the part representing the harmonics, the value of the weight α(k, t) approaches '1,' so that a voice spectrum must not be used to update the noise spectrum. Accordingly, the value of a voice potential weight α(k, t) depending on the values of the GVPP and LVPP is determined with a point of reference defined by TABLE 1. In TABLE 1 below, the LVPP has the values between '0' and '1,' by normalizing the result values of the harmonics spectrogram of Fig. 3C. Also, the result values of the harmonics spectrogram 205 are added on a frame-by-frame basis, and are then normalized with the consequence that the GVPP has values between '0' and '1.'

TABLE 1

| LVPP(k, t) | GVPP(k, t) | the possibility to be a voice | α(k, t) |
|---|---|---|---|
| large | large | very large | 1 |
| large | small | Large | the value approaching 1 |
| small | large | very small | 0 |
| small | small | Small | the value approaching 0 |

In the above table 1, the values of the GVPP and LVPP I can be determined by a reference value.
Then, by using Equation (2) defined below, a weight α (k, t) is computed.

$$\alpha(k,t) = 1 - \frac{0.5}{1 + \exp(-20 \times (LVPP(k,t) + 0.5) \times (0.3 - GVPP(k,t)))} \quad\quad (2)$$

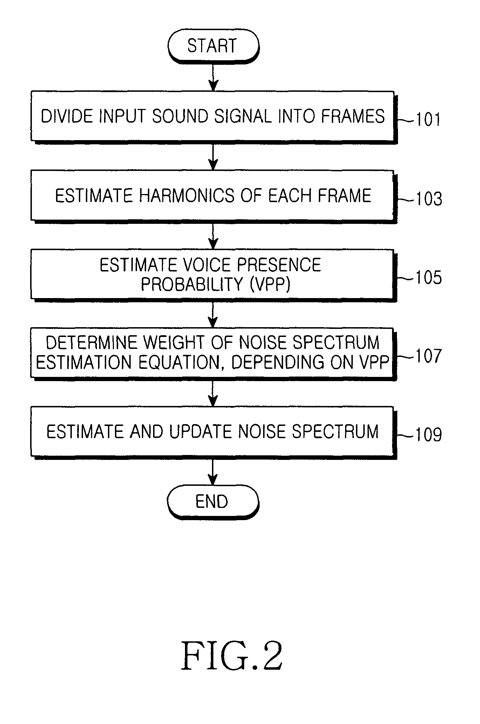

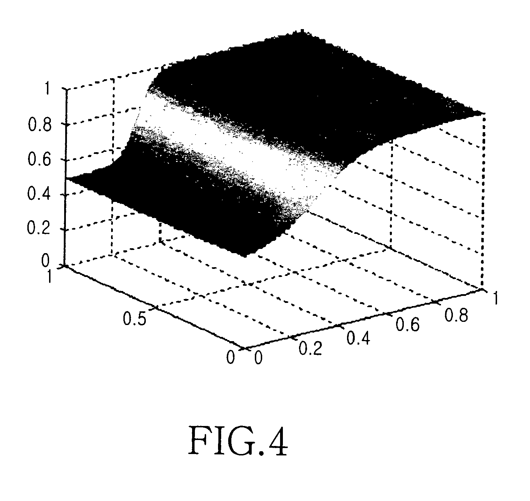

Equation (2) can be represented as a graph as illustrated in FIG. 4, which is a graph of values of weights of an equation necessary to estimate a noise spectrum according to an embodiment of the present invention.
The weight determination unit 40 outputs a determined weight to the noise spectrum update unit 50. Then, by using an input weight and Equation (1), the noise spectrum update unit 50 estimates a noise spectrum, and updates the value of a noise spectrum estimated by up to an immediately previous frame. An operation process of the above noise estimation apparatus is illustrated in FIG. 2.
As illustrated in FIG. 2, the noise estimation apparatus divides an input sound signal into frames in step 101, and proceeds to step 103. In step 103, the noise estimation apparatus estimates harmonics of each frame, and proceeds to step 105. In step 105, the noise estimation apparatus uses the estimated harmonics to estimate VPP, and proceeds to step 107 to determine a weight of Equation (1) on the basis of the estimated VPP. In step 109, the noise estimation apparatus uses the determined weight to estimate a noise spectrum, updates a noise spectrum, and completes an operation process. The noise spectrum that has been estimated through the above process is used to remove the noise from the input sound signal.
As described, in the present invention the harmonics components of the sound signal are used to compute the probability that a voice signal will be present in the sound signal, the weight of Equation (1) is determined based on the computed probability to estimate the noise spectrum, and therefore the weights have a more extensive range than in conventional systems. Namely, it can be understood that in a conventional Minima Controlled Recursive Averaging (MCRA) scheme, the range of a weight α(k, t) corresponds to 0.95≤α(k, t)≤1, whereas according to the present invention, the range of a weight α(k, t) corresponds to 0.5≤α(k, t)≤1. Accordingly, a noise spectrum estimated according to the present invention is compared with a noise spectrum obtained in the conventional MCRA scheme as illustrated in FIGs.

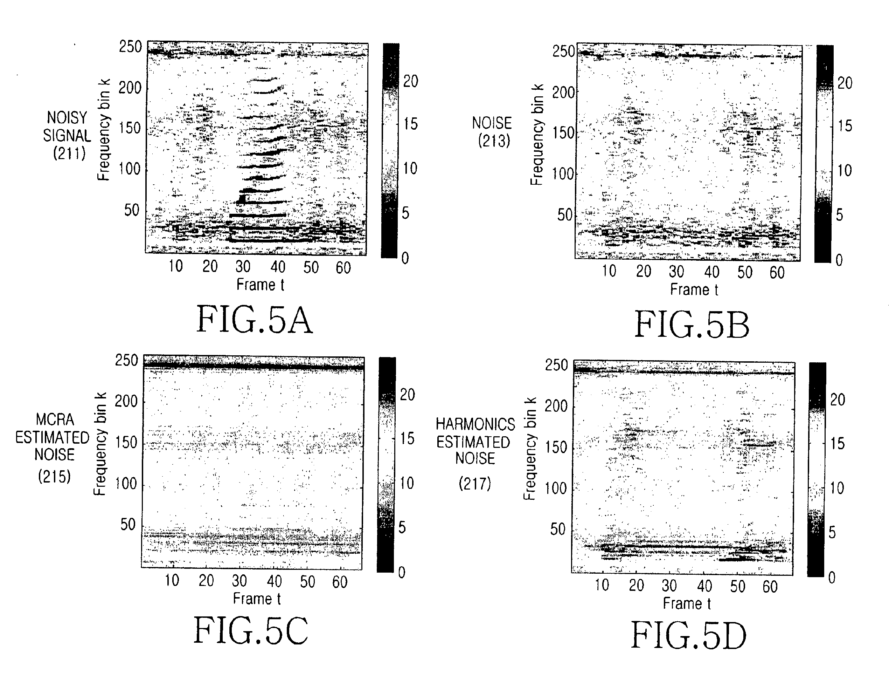

5A-D, which are views illustrating examples of diagrams drawn based on a noise spectrum estimations implemented in a prior scheme and according to an embodiment of the present invention. With reference to FIG. 5C, when noise 213 included in a noisy signal 211 is as illustrated in FIG. 5A, it can be appreciated that a noise spectrum 217 (Fig. 5D) estimated by using the harmonics components according to the present invention is more similar to original noise 213 (Fig. 5B) than a noise spectrum 215 (Fig. 5C) estimated in the MCRA scheme. Also, if non-stationary noise having as large a magnitude as voice energy is generated, a conventional scheme in which the SNR has been used as a factor to determine a weight regards noise as a voice in processing the noise, whereas harmonics are used as a factor to determine a weight in the present invention, thereby estimating the non-stationary noise and thereby updating a noise spectrum.

The merits and effects of exemplary embodiments, as disclosed in the present invention, and as so configured to operate above, are described as follows.

As described above, according to the present invention, harmonics components of a sound signal are used to compute probability that a voice signal will be present in a sound signal, a weight of a noise spectrum estimation equation is determined based on the computed probability to estimate a noise spectrum, and therefore weights can have a more extensive range than in conventional systems. Also, as harmonics are used as a factor to determine the weight, a noise spectrum is updated using an estimation of non-stationary noise.

While the invention has been shown and described with reference to certain exemplary embodiments thereof, it will be understood by those skilled in the art that various changes in form and details may be made therein without departing from the scope of the invention. Therefore, the present invention is not limited to the described embodiments thereof but defined by the appended claims.

## Claims

1. A method for estimating noise by using harmonics of a voice signal, the method comprising the steps of:

   detecting harmonics components in frames of an input sound signal, the harmonics components being frequency components corresponding to vibrations of vocal chords by the human's pronunciation of a vocal sound, the detection resulting in frequency and frame dependent values of a harmonics spectrogram (205) where harmonics appear in the shape of stripes;
   computing (105) a probability of presence of voice on the frames of the input sound signal, comprising computing a Local Voice Presence Probability, LVPP, by normalizing the values of the harmonics spectrogram to be between 0 and 1, and a Global Voice Presence Probability, GVPP, by adding the values of the harmonics spectrogram on a frame-by-frame basis and then normalizing them to be between 0 and 1;
   determining (107) a voice potential weight for estimating a noise spectrum depending on the computed probability of presence of voice, wherein the voice potential weight is determined to be 1 when the LVPP and the GVPP are both large, wherein the voice potential weight is determined to be a value approaching 1 when the LVPP is large and the GVPP is small, wherein the voice potential weight is determined to be 0 when the LVPP is small and the GVPP is large, and wherein the voice potential weight is determined to be a value approaching 0 when the LVPP and the GVPP are both small; and
   estimating (109) the noise spectrum by using the determined voice potential weight and an equation and updating the noise spectrum, the equation being

$$N(k,t) = \alpha(k,t)N(k,t-1) + (1-\alpha(k,t))Y(k,t),$$

   wherein $N(k,t)$ represents the noise spectrum, $Y(k,t)$ represents a spectrum of the input sound signal, $k$ represents a frequency index, $t$ represents a frame index and $\alpha(k,t)$ represents the voice potential weight.

2. An apparatus for estimating noise by using harmonics of a voice signal, the apparatus comprising:

   a harmonics detection unit (23) for detecting harmonic components in frames of an input sound signal, the harmonics components being frequency components corresponding to vibrations of vocal chords by the human's pronunciation of a vocal sound, the detection resulting in frequency and frame dependent values of a harmonics spectrogram (205) where harmonics appear in the shape of stripes;
   a voice estimation unit (30) for computing a probability of presence of voice on the frames of the input sound signal, comprising computing a Local Voice Presence Probability, LVPP, by normalizing the values of the harmonics spectrogram to be between 0 and 1, and a Global Voice Presence Probability, GVPP, by adding the values of the harmonics spectrogram on a frame-by-frame basis and then normalizing them to be between 0 and 1;

a weight determination unit (40) for determining a voice potential weight for estimating a noise spectrum depending on the computed probability of presence of voice, wherein the voice potential weight is determined to be 1 when the LVPP and the GVPP are both large, wherein the voice potential weight is determined to be a value approaching 1 when the LVPP is large and the GVPP is small, wherein the voice potential weight is determined to be 0 when the LVPP is small and the GVPP is large, and wherein the voice potential weight is determined to be a value approaching 0 when the LVPP and the GVPP are both small; and

a noise spectrum update unit (50) for estimating the noise spectrum by using the determined voice potential weight and an equation and updating the noise spectrum, the equation being

$$N(k,t) = \alpha(k,t)N(k,t-1) + (1 - \alpha(k,t))Y(k,t),$$

where N(k, t) represents the noise spectrum, Y(k, t) represents a spectrum of the input sound signal, k represents a frequency index, t represents a frame index and $\alpha$(k, t) represents the voice potential weight.

3.  The apparatus as claimed in claim 2, further comprising a sound signal input unit (10) for dividing the input sound signal into frames respectively having predetermined lengths and then outputting the frames.

4.  A method for estimating noise by using harmonics of a voice signal, the method comprising the steps of:

detecting harmonics components in frames of an input sound signal, the harmonics components being frequency components corresponding to vibrations of vocal chords by the human's pronunciation of a vocal sound, the detection resulting in frequency and frame dependent values of a harmonics spectrogram (205) where harmonics appear in the shape of stripes;

computing (105) a Local Voice Presence Probability, LVPP, by normalizing the values of the harmonics spectrogram to be between 0 and 1, and a Global Voice Presence Probability, GVPP, by adding the values of the harmonics spectrogram on a frame-by-frame basis and then normalizing them to be between 0 and 1;

determining (107) a voice potential weight $\alpha(k,t)$ for estimating a noise spectrum depending on the computed LVPP and GVPP using:

$$\alpha(k,t) = 1 - \frac{0.5}{1 + \exp(-20 \times (LVPP(k,t) + 0.5) \times (0.3 - GVPP(k,t)))};$$

and

estimating (109) the noise spectrum by using the determined voice potential weight and an equation and updating the noise spectrum, the equation being

$$N(k,t) = \alpha(k,t)N(k,t-1) + (1 - \alpha(k,t))Y(k,t),$$

wherein $N(k,t)$ represents the noise spectrum, $Y(k,t)$ represents a spectrum of the input sound signal, $k$ represents a frequency index, and $t$ represents a frame index.

5.  An apparatus for estimating noise by using harmonics of a voice signal, the apparatus comprising:

a harmonics detection unit (23) for detecting harmonic components in frames of an input sound signal, the harmonics components being frequency components corresponding to vibrations of vocal chords by the human's pronunciation of a vocal sound, the detection resulting in frequency and frame dependent values of a harmonics spectrogram (205) where harmonics appear in the shape of stripes;

a voice estimation unit (30) for computing a Local Voice Presence Probability, LVPP, by normalizing the values of the harmonics spectrogram to be between 0 and 1, and a Global Voice Presence Probability, GVPP, by adding the values of the harmonics spectrogram on a frame-by-frame basis and then normalizing them to be between 0 and 1;

a weight determination unit (40) for determining a voice potential weight $\alpha(k, t)$ for estimating a noise spectrum depending on the computed LVPP and GVPP using:

$$\alpha(k,t)=1-\frac{0.5}{1+\exp(-20\times(LVPP(k,t)+0.5)\times(0.3-GVPP(k,t)))};$$

and

a noise spectrum update unit (50) for estimating the noise spectrum by using the determined voice potential weight and an equation and updating the noise spectrum, the equation being

$$N(k,t)=\alpha(k,t)N(k,t-1)+(1-\alpha(k,t))Y(k,t),$$

where N(k, t) represents the noise spectrum, Y(k, t) represents a spectrum of the input sound signal, k represents a frequency index, and t represents a frame index.

6. The apparatus as claimed in claim 5, further comprising a sound signal input unit (10) for dividing the input sound signal into frames respectively having predetermined lengths and then outputting the frames.

**Patentansprüche**

1. Verfahren zur Rauschschätzung unter Verwendung von Harmonischen eines Sprachsignals, wobei das Verfahren folgende Schritte umfasst:

Erkennen von Harmonischenkomponenten in Frames aus einem Eingangstonsignal, wobei die Harmonischenkomponenten Frequenzkomponenten sind, die den Schwingungen von Stimmbändern bei der menschlichen Aussprache eines Sprachlauts entsprechen und die Erkennung zu frequenz- und frameabhängigen Werten eines Harmonischenspektrogramms (205) führt, in dem die Harmonischen in Form von Streifen erscheinen;
Berechnen (105) einer Sprachpräsenzwahrscheinlichkeit auf den Frames des Eingangstonsignals, umfassend das Berechnen einer lokalen Sprachpräsenzwahrscheinlichkeit (Local Voice Presence Probability, LVPP) durch Normieren der Werte des Harmonischenspektrogramms auf zwischen 0 und 1, und einer globalen Sprachpräsenzwahrscheinlichkeit (Global Voice Presence Probability, GVPP) durch Addieren der Werte des Harmonischenspektrogramms auf Frame-by-Frame-Basis und anschließendes Normieren derselben auf Werte zwischen 0 und 1;
Bestimmen (107) eines Sprach-Potential-Gewichts (Voice Potential Weight) zum Schätzen eines Rauschspektrums in Abhängigkeit von der berechneten Sprachpräsenzwahrscheinlichkeit, wobei das Sprach-Potential-Gewicht als 1 bestimmt wird, wenn sowohl die LVPP als auch die GVPP hoch sind, wobei das Sprach-Potential-Gewicht als annähernd 1 bestimmt wird, wenn die LVPP hoch und die GVPP gering ist, wobei das Sprach-Potential-Gewicht als 0 bestimmt wird, wenn die LVPP gering und die GVPP hoch ist, und wobei das Sprach-Potential-Gewicht als annähernd 0 bestimmt wird, wenn sowohl die LVPP als auch die GVPP gering sind; und
Schätzen (109) des Rauschspektrums unter Verwendung des bestimmten Sprach-Potential-Gewichts und einer Gleichung und Aktualisieren des Rauschspektrums, wobei die Gleichung wie folgt lautet:

$$N(k,t) = \alpha(k,t)N(k,t-1) + (1-\alpha(k,t))Y(k,t),$$

wobei $N(k,t)$ das Rauschspektrum repräsentiert, $Y(k,t)$ ein Spektrum des Eingangstonsignals repräsentiert, keinen Frequenzindex repräsentiert, $t$ einen Frame-Index repräsentiert und $\alpha(k,t)$ das Sprach-Potential-Gewicht repräsentiert.

2. Vorrichtung zur Rauschschätzung unter Verwendung von Harmonischen eines Sprachsignals, wobei die Vorrichtung umfasst:

eine Harmonischenerkennungseinheit (23) zum Erkennen von Harmonischenkomponenten in Frames aus einem Eingangstonsignal, wobei die Harmonischenkomponenten Frequenzkomponenten sind, die den Schwingungen von Stimmbändern bei der menschlichen Aussprache eines Sprachlaut entsprechen und die Erkennung zu frequenz- und frameabhängigen Werten eines Harmonischenspektrogramms (205) führt, in dem die Harmonischen in Form von Streifen erscheinen;

eine Sprachschätzungseinheit (30) zum Berechnen einer Sprachpräsenzwahrscheinlichkeit auf den Frames des Eingangstonsignals, umfassend das Berechnen einer lokalen Sprachpräsenzwahrscheinlichkeit (Local Voice Presence Probability, LVPP) durch Normieren der Werte des Harmonischenspektrogramms auf zwischen 0 und 1, und einer globalen Sprachpräsenzwahrscheinlichkeit (Global Voice Presence Probability, GVPP) durch Addieren der Werte des Harmonischenspektrogramms auf Frame-by-Frame-Basis und anschließendes Normieren derselben auf Werte zwischen 0 und 1;

eine Gewichtbestimmungseinheit (40) zum Bestimmen eines Sprach-Potential-Gewichts (Voice Potential Weight) zum Schätzen eines Rauschspektrums in Abhängigkeit von der berechneten Sprachpräsenzwahrscheinlichkeit, wobei das Sprach-Potential-Gewicht als 1 bestimmt wird, wenn sowohl LVPP als auch GVPP hoch sind, wobei das Sprach-Potential-Gewicht als annähernd 1 bestimmt wird, wenn die LVPP hoch und die GVPP gering ist, wobei das Sprach-Potential-Gewicht als 0 bestimmt wird, wenn die LVPP gering und die GVPP hoch ist, und wobei das Sprach-Potential-Gewicht als annähernd 0 bestimmt wird, wenn sowohl die LVPP als auch die GVPP gering sind; und

eine Rauschspektrum-Aktualisierungseinheit (50) zum Schätzen des Rauschspektrums unter Verwendung des bestimmten Sprach-Potential-Gewichts und einer Gleichung und Aktualisieren des Rauschspektrums, wobei die Gleichung wie folgt lautet:

$$N(k,t) = \alpha(k,t)N(k,t-1) + \big(1 - \alpha(k,t)\big)Y(k,t),$$

wobei $N(k,t)$ das Rauschspektrum repräsentiert, $Y(k,t)$ ein Spektrum des Eingangstonsignals repräsentiert, $k$ einen Frequenzindex repräsentiert, $t$ einen Frame-Index repräsentiert und $\alpha(k,t)$ das Sprach-Potential-Gewicht repräsentiert.

3. Vorrichtung nach Anspruch 2, weiterhin umfassend eine Tonsignal-Eingangseinheit (10) zum Teilen des Eingangstonsignals in Frames mit jeweils vorgegebenen Längen und zum anschließenden Ausgeben der Frames.

4. Verfahren zur Rauschschätzung unter Verwendung von Harmonischen eines Sprachsignals, wobei das Verfahren folgende Schritte umfasst:

Erkennen von Harmonischenkomponenten in Frames aus einem Eingangstonsignal, wobei die Harmonischenkomponenten Frequenzkomponenten sind, die den Schwingungen von Stimmbändern bei der menschlichen Aussprache eines Sprachlauts entsprechen und die Erkennung zu frequenz- und frameabhängigen Werten eines Harmonischenspektrogramms (205) führt, in dem die Harmonischen in Form von Streifen erscheinen;

Berechnen (105) einer lokalen Sprachpräsenzwahrscheinlichkeit (Local Voice Presence Probability, LVPP) durch Normieren der Werte des Harmonischenspektrogramms auf zwischen 0 und 1, und einer globalen Sprachpräsenzwahrscheinlichkeit (Global Voice Presence Probability, GVPP) durch Addieren der Werte des Harmonischenspektrogramms auf Frame-by-Frame-Basis und anschließendes Normieren derselben auf Werte zwischen 0 und 1;

Bestimmen (107) eines Sprach-Potential-Gewichts $\alpha(k,t)$ zum Schätzen eines Rauschspektrums in Abhängigkeit von der berechneten LVPP und GVPP unter Verwendung folgender Gleichung:

$$\alpha(k,t) = 1 - \frac{0{,}5}{1+\exp\big(-20x(LVPP(k,t)+0{,}5)x\big(0{,}3-GVPP(k,t)\big)\big)};$$

und

Schätzen (109) des Rauschspektrums unter Verwendung des bestimmten Sprach-Potential-Gewichts und einer Gleichung und Aktualisieren des Rauschspektrums, wobei die Gleichung wie folgt lautet:

$$N(k,t) = \alpha(k,t)N(k,t-1) + \left(1 - \alpha(k,t)\right)Y(k,t),$$

wobei $N(k,t)$ das Rauschspektrum repräsentiert, $Y(k,t)$ ein Spektrum des Eingangstonsignals repräsentiert, $k$ einen Frequenzindex repräsentiert und $t$ einen Frame-Index repräsentiert.

5. Vorrichtung zur Rauschschätzung unter Verwendung von Harmonischen eines Sprachsignals, wobei die Vorrichtung umfasst:

eine Harmonischenerkennungseinheit (23) zum Erkennen von Harmonischenkomponenten in Frames aus einem Eingangstonsignal, wobei die Harmonischenkomponenten Frequenzkomponenten sind, die den Schwingungen von Stimmbändern bei der menschlichen Aussprache eines Sprachlaut entsprechen und die Erkennung zu frequenz- und frameabhängigen Werten eines Harmonischenspektrogramms (205) führt, in dem die Harmonischen in Form von Streifen erscheinen;
eine Sprachschätzungseinheit (30) zum Berechnen einer lokalen Sprachpräsenzwahrscheinlichkeit (Local Voice Presence Probability, LVPP) durch Normieren der Werte des Harmonischenspektrogramms auf zwischen 0 und 1, und einer globalen Sprachpräsenzwahrscheinlichkeit (Global Voice Presence Probability, GVPP) durch Addieren der Werte des Harmonischenspektrogramms auf Frame-by-Frame-Basis und anschließendes Normieren derselben auf Werte zwischen 0 und 1;
eine Gewichtsbestimmungseinheit (40) zum Bestimmen eines Sprach-Potential-Gewichts $\alpha(k,t)$ zum Schätzen eines Rauschspektrums in Abhängigkeit von der berechneten LVPP und GVPP unter Verwendung folgender Gleichung:

$$\alpha(k,t) = 1 - \frac{0{,}5}{1+\exp\left(-20x(LVPP(k,t)+0{,}5)x\left(0{,}3-GVPP(k,t)\right)\right)};$$

und
eine Rauschspektrum-Aktualisierungseinheit (50) zum Schätzen des Rauschspektrums unter Verwendung des bestimmten Sprach-Potential-Gewichts und einer Gleichung und Aktualisieren des Rauschspektrums, wobei die Gleichung wie folgt lautet:

$$N(k,t) = a(k,t)N(k,t-1) + (1 - a(k,t))Y(k,t),$$

wobei $N(k,t)$ das Rauschspektrum repräsentiert, $Y(k,t)$ ein Spektrum des Eingangstonsignals repräsentiert, $k$ einen Frequenzindex repräsentiert und $t$ einen Frame-Index repräsentiert.

6. Vorrichtung nach Anspruch 5, weiterhin umfassend eine Tonsignal-Eingangseinheit (10) zum Teilen des Eingangstonsignals in Frames mit jeweils vorgegebenen Längen und zum anschließenden Ausgeben der Frames.

**Revendications**

1. Procédé d'estimation de bruit utilisant les harmoniques d'un signal vocal, le procédé comprenant les étapes consistant à :

détecter des composantes harmoniques dans les trames d'un signal sonore d'entrée, les composantes harmoniques étant des composantes de fréquence correspondant aux vibrations de cordes vocales provenant de la prononciation d'un son vocal par un être humain, la détection produisant des valeurs dépendant de la fréquence et de la trame d'un spectrogramme d'harmoniques (205) où les harmoniques apparaissent sous forme de bandes ;

calculer (105) la probabilité de la présence d'une voix sur les trames du signal sonore d'entrée, comprenant le calcul d'une probabilité de présence de voix locale, LVPP, en normalisant les valeurs du spectrogramme d'harmoniques entre 0 et 1, et une probabilité de présence de voix globale, GVPP, en additionnant les valeurs du spectrogramme d'harmoniques, trame par trame, puis en les normalisant entre 0 et 1 ;

déterminer (107) un poids potentiel de voix pour estimer un spectre de bruit en fonction de la probabilité de présence de voix calculée, dans lequel on détermine que le poids potentiel de voix est égal à 1 lorsque la LVPP et la GVPP sont toutes deux importantes, dans lequel on détermine que le poids potentiel de voix est égal à une valeur s'approchant de 1 lorsque la LVPP est grande et la GVPP est petite, dans lequel on détermine que le poids potentiel de voix est égal à 0 lorsque la LVPP est petite et la GVPP est grande, et dans lequel on détermine que le poids potentiel de voix est égal à une valeur s'approchant de 0 lorsque la LVPP et la GVPP sont toutes deux petites ; et

estimer (109) le spectre de bruit en utilisant le poids potentiel de voix déterminé et une équation et mettre à jour le spectre de bruit, l'équation étant la suivante

$$N(k, t) = \alpha(k, t)N(k, t-1) + (1 - \alpha(k, t))Y(k, t),$$

dans laquelle N(k, t) représente le spectre de bruit, Y(k, t) représente le spectre du signal sonore d'entrée, k représente l'indice de fréquence, 1 représente l'indice de trame et $\alpha$(k, t) représente le poids potentiel de voix.

**2.** Dispositif d'estimation de bruit utilisant les harmoniques d'un signal vocal, le dispositif comprenant :

une unité de détection d'harmoniques (23) pour détecter des composantes harmoniques dans les trames d'un signal sonore d'entrée, les composantes harmoniques étant des composantes de fréquence correspondant aux vibrations de cordes vocales provenant de la prononciation d'un son vocal par un être humain, la détection produisant des valeurs dépendant de la fréquence et de la trame d'un spectrogramme d'harmoniques (205) où les harmoniques apparaissent sous forme de bandes ;

une unité d'estimation de voix (30) pour calculer la probabilité de la présence de voix sur les trames du signal sonore d'entrée, comprenant le calcul d'une probabilité de présence de voix locale, LVPP, en normalisant les valeurs du spectrogramme d'harmoniques entre 0 et 1, et une probabilité de présence de voix globale, GVPP, en additionnant les valeurs du spectrogramme d'harmoniques, trame par trame, puis en les normalisant entre 0 et 1 ;

une unité de détermination de poids (40) pour déterminer un poids potentiel de voix pour estimer un spectre de bruit en fonction de la probabilité de présence de voix calculée, dans lequel on détermine que le poids potentiel de voix est égal à 1 lorsque la LVPP et la GVPP sont toutes deux importantes, dans lequel on détermine que le poids potentiel de voix est égal à une valeur s'approchant de 1 lorsque la LVPP est grande et la GVPP est petite, dans lequel on détermine que le poids potentiel de voix est égal à 0 lorsque la LVPP est petite et la GVPP est grande, et dans lequel on détermine que le poids potentiel de voix est égal à une valeur s'approchant de 0 lorsque la LVPP et la GVPP sont toutes deux petites ; et

une unité de mise à jour de spectre de bruit (50) pour estimer le spectre de bruit en utilisant le poids potentiel de voix déterminé et une équation et mettre à jour le spectre de bruit, l'équation étant la suivante

$$N(k, t) = \alpha(k, t)N(k, t-1) + (1 - \alpha(k, t))Y(k, t),$$

dans laquelle N(k, t) représente le spectre de bruit, Y(k, t) représente le spectre du signal sonore d'entrée, k représente l'indice de fréquence, 1 représente l'indice de trame et $\alpha$(k, t) représente le poids potentiel de voix.

**3.** Dispositif selon la revendication 2, comprenant en outre une unité d'entrée de signal sonore (10) pour diviser le signal sonore d'entrée en trames ayant respectivement des longueurs prédéterminées, puis pour fournir les trames en sortie.

**4.** Procédé d'estimation de bruit utilisant les harmoniques d'un signal vocal, le procédé comprenant les étapes consistant à :

détecter des composantes harmoniques dans les trames d'un signal sonore d'entrée, les composantes harmoniques étant des composantes de fréquence correspondant aux vibrations de cordes vocales provenant de la prononciation d'un son vocal par un être humain, la détection produisant des valeurs dépendant de la fréquence et de la trame d'un spectrogramme d'harmoniques (205) où les harmoniques apparaissent sous forme de bandes ;

calculer (105) une probabilité de présence de voix locale, LVPP, en normalisant les valeurs du spectrogramme d'harmoniques entre 0 et 1, et une probabilité de présence de voix globale, GVPP, en additionnant les valeurs du spectrogramme d'harmoniques, trame par trame, puis en les normalisant entre 0 et 1 ;

déterminer (107) un poids potentiel de voix $\alpha(k, t)$ pour estimer un spectre de bruit en fonction de la LVPP et de la GVPP calculées en utilisant l'équation suivante :

$$\alpha(k,t) = 1 - \frac{0,5}{1 + \exp(-20x(LVPP(k,t) + 0,5)x(0,3 - GVPP(k,t)))} \quad ;$$

et

estimer (109) le spectre de bruit en utilisant le poids potentiel de voix déterminé et une équation et mettre à jour le spectre de bruit, l'équation étant la suivante

$$N(k, t) = \alpha(k, t)N(k, t-1) + (1 - \alpha(k, t))Y(k, t),$$

dans laquelle N(k, t) représente le spectre de bruit, Y(k, t) représente le spectre du signal sonore d'entrée, k représente l'indice de fréquence, 1 représente l'indice de trame.

5. Dispositif d'estimation de bruit utilisant les harmoniques d'un signal vocal, le dispositif comprenant :

une unité de détection d'harmoniques (23) pour détecter des composantes harmoniques dans les trames d'un signal sonore d'entrée, les composantes harmoniques étant des composantes de fréquence correspondant aux vibrations de cordes vocales provenant de la prononciation d'un son vocal par un être humain, la détection produisant des valeurs dépendant de la fréquence et de la trame d'un spectrogramme d'harmoniques (205) où les harmoniques apparaissent sous forme de bandes ;

une unité d'estimation de voix (30) pour calculer une probabilité de présence de voix locale, LVPP, en normalisant les valeurs du spectrogramme d'harmoniques entre 0 et 1, et une probabilité de présence de voix globale, GVPP, en additionnant les valeurs du spectrogramme d'harmoniques, trame par trame, puis en les normalisant entre 0 et 1 ;

une unité de détermination de poids (40) pour déterminer un poids potentiel de voix $\alpha(k, t)$ pour estimer un spectre de bruit en fonction de la LVPP et de la GVPP calculées en utilisant l'équation suivante :

$$\alpha(k,t) = 1 - \frac{0,5}{1 + \exp(-20x(LVPP(k,t) + 0,5)x(0,3 - GVPP(k,t)))} \quad ;$$

et

une unité de mise à jour de spectre de bruit (50) pour estimer le spectre de bruit en utilisant le poids potentiel de voix déterminé et une équation et mettre à jour le spectre de bruit, l'équation étant la suivante

$$N(k, t) = \alpha(k, t)N(k, t-1) + (1 - \alpha(k, t))Y(k, t),$$

dans laquelle N(k, t) représente le spectre de bruit, Y(k, t) représente le spectre du signal sonore d'entrée, k représente l'indice de fréquence, 1 représente l'indice de trame.

6. Dispositif selon la revendication 5, comprenant en outre une unité d'entrée de signal sonore (10) pour diviser le signal sonore d'entrée en trames ayant respectivement des longueurs prédéterminées, puis pour fournir les trames en sortie.

FIG.1

EP 1 973 104 B1

START

DIVIDE INPUT SOUND SIGNAL INTO FRAMES ~101

ESTIMATE HARMONICS OF EACH FRAME ~103

ESTIMATE VOICE PRESENCE
PROBABILITY (VPP) ~105

DETERMINE WEIGHT OF NOISE SPECTRUM
ESTIMATION EQUATION, DEPENDING ON VPP ~107

ESTIMATE AND UPDATE NOISE SPECTRUM ~109

END

FIG.2

FIG.3A

POWER SPECTRUM (201)

Frame t

Frequency bin k

FIG.3B

LPC SPECTRUM (203)

Frame t

Frequency bin k

FIG.3C

HARMONICS SPECTROGRAM (205)

Frame t

Frequency bin k

FIG.4

FIG.5B

NOISE
(213)

FIG.5D

HARMONICS
ESTIMATED
NOISE
(217)

FIG.5A

NOISY
SIGNAL
(211)

FIG.5C

MCRA
ESTIMATED
NOISE
(215)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1059628 A2